# EUROPÄISCHE PATENTANMELDUNG

(11) **EP 2 578 348 A2**
(43) Veröffentlichungstag der Anmeldung: **10.04.2013**
(21) Anmeldenummer: 12186586.9
(22) Anmeldetag: 28.09.2012
(51) Int. Cl.: B23K 20/12, B23K 37/02

(54) **Bewegbare Fügeeinrichtung zum Verbinden von Strukturbauteilen eines Luftfahrzeuges**

(30) Priorität: 06.10.2011 DE 102011114924; 06.10.2011 US 201161543878 P
(71) Anmelder: Airbus Operations GmbH, 21129 Hamburg (DE)
(72) Erfinder: Pacchione, Marco, 22605 Hamburg (DE); Pezzi, Matteo, 48026 Russi (RA) (IT); Richter-Trummer, Valentin, 4425-407 Ermesinde (PT)
(74) Vertreter: Maiwald Patentanwalts GmbH

(57) **Zusammenfassung**

Die Erfindung betrifft eine bewegbare Fügeeinrichtung zum Verbinden von Strukturbauteilen (2a, 2b) eines Luftfahrzeuges, mit Fügemitteln, welche auf einer an der Außenseite der Strukturbauteile (2a, 2b) angeordneten Führungsvorrichtung (1) verfahrbar angeordnet ist, um benachbart zueinander positionierte Fügekanten (3a, 3b) der Strukturbauteile (2a, 2b) fest miteinander zu verbinden, wobei die Fügemittel eine auf der schienenartigen Führungsvorrichtung (1) verfahrbare Schweißeinheit (4) umfassen, die mit einem Bobbin-Tool (11) als Werkzeug zum Reibrührschweißen ausgestattet ist.

## Beschreibung

### Gebiet der Erfindung

Die Erfindung betrifft eine bewegbare Fügeeinrichtung zum Verbinden von Strukturbauteilen eines Luftfahrzeuges, mit Fügemitteln, welche auf einer an der Außenseite der Strukturbauteile angeordneten Führungsvorrichtung verfahrbar angeordnet sind, um benachbart zueinander positionierte Fügekanten der Strukturbauteile fest miteinander zu verbinden.

Das Einsatzgebiet der Erfindung erstreckt sich auf den Flugzeugbau. Zur Montage großvolumiger Rümpfe von beispielsweise Verkehrsflugzeugen werden einzelne Strukturbauteile, wie Seitenteile, Bodenteile und Dachteile über Längsnähte zu einer Rumpfsektion verbunden und einzelne hohlzylinderartige Rumpfsektionen werden anschließend über Quernähte miteinander zum Flugzeugrumpf zusammengefügt. Daneben ist es auch denkbar, dass einzelne hohizylinderartige Rumpfsektionen zweistückig oder einstückig ausgebildet sind. Jedes Strukturbauteil besteht aus einer aus längs verlaufenden Stringern und quer hierzu verlaufenden Spanten aufgebauten Unterkonstruktion, auf welche die meist aus einem Leichtmetallblech bestehende Außenhaut des Flugzeuges aufgebracht ist. Die einzelnen Strukturbauteile werden gewöhnlich durch Nieten miteinander zus ammengefügt.

### Hintergrund der Erfindung

Aus der US 6,843,328 B2 geht eine bewegbare Fügeeinrichtung zum Fügen von miteinander zu verbindenden Strukturbauteilen durch Nieten hervor. Die Fügeeinrichtung besteht aus einer rechteckförmigen Rahmenkonstruktion, welche mit an der Unterseite montierten Vakuuznsaugnäpfen an den miteinander zu verbindenden Strukturbauteilen entlang der Fügekanten befestigbar ist. Diese Rahmenkonstruktion bildet eine Führungsvorrichtung für einen hierauf längs der Fügekanten verfahrbaren Trägerwagen. Auf dem Trägerwagen ist eine Bohreinheit montiert, welche durch die Führungsvorrichtung entlang der Fügekanten zu jeder Nietposition verfahrbar ist.

Diese bewegbare Fügeeinrichtung des Standes der Technik ist auf das Verbinden von Strukturbauteilen mittels Nieten ausgelegt und muss abschnittsweise entlang der Fügekanten weiter versetzt werden, um eine Nietenreihe entlang der gesamten Länge der Fügekanten der Strukturbauteile herzustellen.

Aus der DE 198 34 702 A1 geht eine Nietvorrichtung zum Herstellen einer hohlzylinderartigen Rumpfsektion vor, welche aus einem äußeren und einem inneren Vorrichtungsteil besteht. Der äußere Vorrichtungsteil weist ein Nietenmaschinensystem auf, das auf einer ringförmigen Schienenführung geführt ist und der innere Vorrichtungsteil weist einen auf einem Haltegestell angeordneten Nietroboter auf. Der Nietroboter wird über eine Steuereinheit zur abgestimmten Positionierung von inneren und äußeren Vorrichtungsteilen an der Nietstelle und zur abgestimmten Steuerung des Arbeitsablaufs angesteuert.

Diese zweigeteilte Nietvorrichtung erfordert somit sowohl Vorrichtungsbestandteile innerhalb der Rumpfsektion als auch außerhalb der Rumpfsektion, welche steuerungstechnisch zu koordinieren sind.

### Kurzbeschreibung der Erfindung

Es ist die Aufgabe der vorliegenden Erfindung, eine bewegbare Fügeeinrichtung zum Verbinden von großflächigen Strukturbauteilen eines Luftfahrzeuges zu schaffen, welche nur einseitig der miteinander zu verbindenden Strukturbauteile eingesetzt werden kann und eine zuverlässige Verbindung von Fügekanten der Strukturbauteile gestattet.

Die Aufgabe wird ausgehend von einer bewegbaren Fügeeinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Fügemittel eine auf der schienenartigen Führungsvorrichtung verfahrbare Schweißeinheit umfassen, die mit einem speziellen sogenannten Bobbin-Tool als Werkzeug zum Reibrührschweißen ausgestattet ist.

Beim Reibrührschweißen wird die Reibenergie durch die Rotation des verschleißfrei rotierenden Werkzeugs erzeugt. Das rotierende Werkzeug wird mit hoher Kraft in den Fügespalt zwischen den miteinander zu verbindenden Strukturbauteilen gedrückt, und mindestens eine Werkzeugschulter kommt auf der Bauteiloberfläche zur Anlage. Durch die Reibung zwischen der mindestens einen Werkzeugschulter und den Fügekanten der Strukturbauteile erwärmt sich der Werkstoff unter der Schulter bis kurz unter den Schmelzpunkt. Dieser Temperaturanstieg hat einen Festigkeitsabfall zur Folge, wodurch der Werkstoff plastifiziert wird und eine Vermischung der Fügezonen möglich wird. Mit dem Einsetzen einer Vorschubbewegung entlang der Fügekanten wird das rotierende Werkzeug mit hoher Anpresskraft fortbewegt. Der durch die Vorschubbewegung entstehende Druckgradient zwischen Vorder- und Rückseite des Werkzeugs und dessen Rotationsbewegung bewirken den Transport von plastifiziertem Werkstoff um das Werkzeug herum, der sich dort vermischt und die Schweißnaht bildet. Die als eine derartige Schweißeinheit ausgebildeten Fügemittel sind erfindungsgemäß mit einem an sich bekannten Bobbin-Tool als Werkzeug zum Reibrührschweißen ausgestattet.

Das Bobbin-Tool besitzt zwei einander gegenüberliegende und auf beide Werkstückoberflächen gleichzeitig einwirkende Werkzeugschultern. Hierdurch kann ein Gegenhalter entfallen, welcher ansonsten an der der äußeren Werkzeugschulter gegenüberliegenden Seite des Werkstücks vorzusehen ist, bei der erfindungsgegenständlichen Anwendung also der Innenseite des Strukturbauteils. Durch ein solches Bobbin-Tool ist das Verschweißen der miteinander zu verbindenden Strukturbauteile unter Nutzung einer Führungsvorrichtung durchführbar, welche nur auf der Außenseite oder der Innenseite der Strukturbauteils angeordnet ist. Unter Bobbin-Tool werden im Rahmen der Erfindung auch andere Werkzeuge zum Rebrührschweißen verstanden, welche mit zwei rotierenden oder nicht-rotierenden Werkzeugschultern ausgestattet sind. Das Bobbin-Tool ist vorzugsweise in Längsrichtung verstellbar am Schweißkopf angebracht, um vor und während des Schweißprozesses justierbar zu sein.

In einer bevorzugten Ausführungsform umfasst die erfindungsgemäße verfahrbare Schweißeinheit einen Trägerwagen, der entlang der schienenartigen Führungsvorrichtung über einen integrierten Antriebsmotor bewegbar ist sowie einen Schweißkopf zur Aufnahme des Bobbin-Tools zum Reibrührschweißen. Der Trägerwagen kann dabei zweiachsig ausgeführt sein und insoweit über vorzugsweise vier Räder auf der Führungsvorrichtung fahren. Ein zwischen den Achsen horizontal wirkendes Wagengelenk kann dabei dem Ausgleich einer ungleichmäßigen Radauflage bei einer schienenartigen Führungsvorrichtung dienen. Der Trägerwagen kann also in sich starr oder gelenkig ausgebildet sein. Das Wagengelenk der schienenartigen Führungsvorrichtung bewirkt, dass der Schweißkopf stets senkrecht zur Werkstückoberfläche ausgerichtet bleibt. Zusätzliche Aktuatoren können vor oder während des Schweißens zur Feinjustage genutzt werden.

Vorzugsweise sollte der Schweißkopf in Vertikalrichtung federnd am Trägerwagen angebracht sein, um das Bobbin-Tool an den Verlauf der Fügekanten anzupassen. Denn die miteinander zu verbindenden Strukturbauteile sind gewöhnlich gewölbt und durch die hierdurch bewirkte Nachführung des Bobbin-Tools in Vertikalrichtung lässt sich mit einfachen technischen Mitteln eine Konturanpassung realisieren. In Vertikalrichtung bedeutet dabei, dass sich der Schweißkopf rechtwinklig zur Werkstückoberflöche bewegen lässt. Daneben ist es auch denkbar, den Schweißkopf in Vertikalrichtung über einen Linearmotor dem Wölbungsverlauf der Strukturbauteile anzupassen. Als Linearmotor kann beispielsweise eine Hydraulikeinheit oder ein elektrischer Linearmotor zur Anwendung kommen, welche/welcher über eine entsprechende die Oberflächenkontur erfassende Sensorik regelungstechnisch ansteuerbar ist. Ähnlich wie die vorstehend beschriebene vertikale Verstellung kann auch eine horizontale Verstellung des Schweißkopfes gegenüber dem Schweißwagen erfolgen, um das Bobbin-Tool an den Verlauf der Fügekanten anzupassen.

Die erfindungsgemäße schienenartige Führungsvorrichtung kann neben der Nutzung in Verbindung mit einer Schweißeinheit auch für eine Trenneinheit verwendet werden. Mit einer solchen Trenneinheit, welche also optional auf die Führungsvorrichtung aufsetzbar ist, lassen sich die Strukturbauteile in einfacher Weise vor dem Verschweißen auf Fertigmaß schneiden oder säubern, um einen für das anschließende Reibrührschweißen exakten Verlauf der benachbart zueinander positionierten Fügekanten zu erzielen.

Weiterhin ist es auch denkbar, die schienenartige Führungsvorrichtung zu verwenden, um Beschichtungseinheiten zur Ausbringung einer Oberflächenbeschichtung nach dem Schweißen, Poliereinheiten zum Entfernen und/oder Polieren von Schweißmarken oder eine Sensoreinheit mit Ultraschallkopf oder dergleichen zur finalen Qualitätskontrolle der hergestellten Schweißnaht zu nutzen.

Vorzugsweise ist die schienenartige Führungsvorrichtung im Bereich der Fügekanten außen an den Strukturbauteilen befestigt. Eine solche äußere Befestigung der Führungsvorrichtung erleichtert wegen der guten Zugänglichkeit eine schnelle und einfache Montage oder Demontage der erfindungsgemäßen bewegbaren Fügeeinrichtung.

Die schienenartige Führungsvorrichtung besteht vorzugsweise aus längs der beiden Fügekanten lösbar befestigten und diesen je zugeordneten Trägerprofilen, welche vorzugsweise als L-Profil ausgeführt sind. Hierdurch wird eine stabile Führung des Trägerwagens erreicht.

Zur weiteren Verbesserung der stabilen Führung des Trägerwagens wird vorgeschlagen, dass an jedem Trägerprofil eine bodenseitige Leitschiene ausgebildet ist, die formschlüssig am Trägerwagen zur Führung und zur Aufnahme von prozessbedingten Querkräften sowie auch Längskräften zum Eingriff kommt. Die Leitschiene kann dabei mit einer Verzahnung ausgeführt werden, um den Trägerwagen entlang der Führung per Zahnradantrieb zu bewegen.

Daneben ist es auch denkbar, den Trägerwagen über Räder oder dergleichen entlang der schienenartigen Führungsvorrichtung zu bewegen, sofern ein schlupffreier Antrieb gewährleistet ist.

### Kurze Beschreibung der Zeichnungen

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Darstellung einer bewegbaren Fügeeinrichtung, welche auf zwei miteinander zu verbindenden Strukturbauteilen im Bereich korrespondierender Fügekanten lösbar aufgebracht ist,
- Figur 2: eine schematische Frontansicht der Fügeeinrichtung nach Figur 1, und
- Figur 3: eine schematische Draufsicht der Fügeeinrichtung nach Figur 1.

### Detailbeschreibung der Zeichnungen

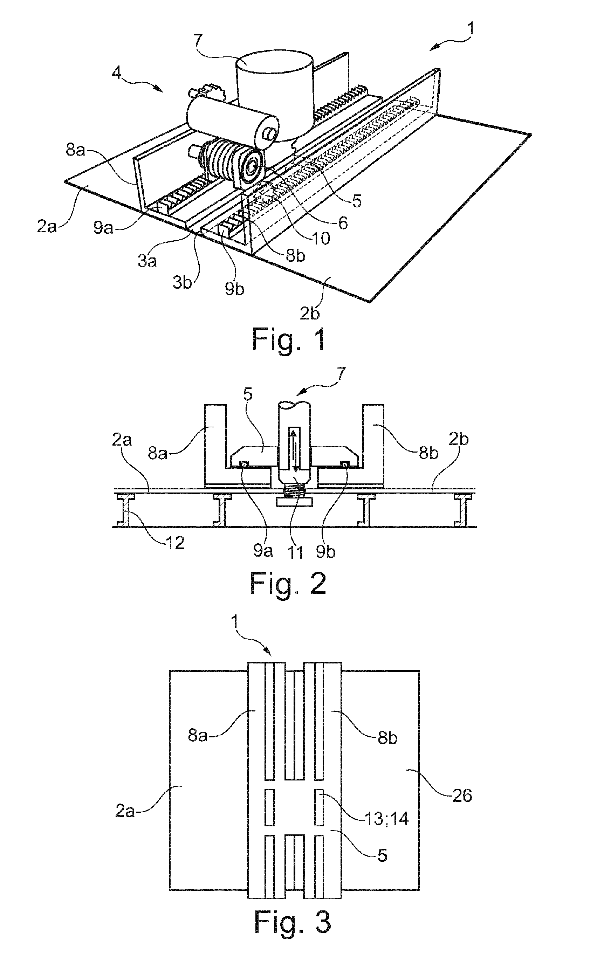

Gemäß Figur 1 ist eine Führungsvorrichtung 1 an der Außenseite der - hier nur Ausschnittsweise dargestellten - Strukturbauteile 1a und 1b angeordnet. Die Führungsvorrichtung 1 ist beidseits von Fügekanten 3a und 3b angeordnet, die je einem der Strukturbauteile 2a bzw. 2b zugeordnet sind.

Die schienenartige Führungsvorrichtung 1 trägt eine hierauf entlang der Fügekanten 3a und 3b verfahrbare Schweißeinheit 4. Mit der Schweißeinheit 4 werden die beiden Strukturbauteile 2a und 2b entlang der Fügekanten 3a und 3b miteinander durch Nutzung des Reibrührschweißverfahrens verschweißt.

Die verfahrbare Schweißeinheit 4 besteht aus einem Trägerwagen 5, der entlang der schienenartigen Führungsvorrichtung 1 über einen Antriebsmotor 6 bewegbar ist. Auf dem Trägerwagen 5 ist weiterhin ein Schweißkopf 7 zur Durchführung des Reibrührschweißverfahrens montiert.

Die Führungsvorrichtung 1 besteht aus längs der beiden Fügekanten 3a und 3b angeordnete Trägerprofile 8a und 8b, welche hier einen L-förmigen Querschnitt aufweisen. Bodenseitig der beiden Trägerprofile 8a und 8b ist je eine Leitschiene 9a bzw. 9b ausgebildet, welche formschlüssig am Trägerwagen 5 zum Eingriff kommt. In diesem Ausführungsbeispiel ist der Trägerwagen 5 mit Zahnrädern 10 (exemplarisch) versehen, um die vom Antriebsmotor 6 erzeugte Antriebskraft auf die als Zahnstangen ausgebildeten Trägerprofile 9a und 9b zu übertragen.

Gemäß Figur 2 sind die Leitschienen 9a und 9b an den beiden Trägerprofilen 8a und 8b auch dafür vorgesehen, gemeinsam mit dem Trägerwagen 5 eine in Querrichtung unverschiebbare Einheit zu bilden, so dass über den Trägerwagen 5 auch schweißprozessbedingte Querkräfte aufgenommen werden. Hierdurch wird verhindert, dass sich die Fügekanten 3a und 3b während des Reibrührschweißens nicht verschieben. Der hier nur teilweise dargestellte Schweißkopf 7 ist mit einem Bobbin-Tool 11 als Werkzeug zum Reibrührschweißen ausgestattet. Der Schweißkopf 7 ist in Vertikalrichtung federnd bewegbar am Trägerwagen 5 angebracht, um das Bobbin-Tool an den Wölbungsverlauf der Strukturbauteile 2a und 2b anzupassen.

Die beiden Trägerprofile 8a und 8b der schienenartigen Führungsvorrichtung 1 sind über lösbare Befestigungsmittel außen an den Strukturbauteilen 2a und 2b befestigt. Innenseitig der Strukturbauteile 2a und 2b verlaufen mehrere beabstandet zueinander angeordnete Stringer 12 zur Verstärkung des Strukturbauteils 2a bzw. 2b.

Gemäß Figur 3 kann die schienenartige Führungsvorrichtung auch für andere Baueinheiten genutzt werden. So ist es beispielsweise auch möglich, dass der Trägerwagen 5 der Führungsvorrichung 1 mit einer Trenneinheit 13 versehen wird. Die Trenneinheit 13 kann mit einer Trennscheibe als Werkzeug ausgestattet werden, um die Fügekanten 3a und 3b der Strukturbauteile 2a und 2b vor dem Verschweißen auf Fertigmaß zu schneiden. Daneben ist es auch denkbar, dass der Trägerwagen 5 mit einer Sensoreinheit 14 ausgestattet wird, um einer Qualitätskontrolle des Trenn- oder Schweißvorganges vorzunehmen. So kann die Sensoreinheit 14 beispielsweise als Ultraschallmessgerät ausgebildet werden, um die Güte der Schweißnaht zu prüfen.

Ergänzend ist darauf hinzuweisen, dass "umfassen" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Führungsvorrichtung
- 2: Strukturbauteil
- 3: Fügekante
- 4: Schweißeinheit
- 5: Trägerwagen
- 6: Antriebsmotor
- 7: Schweißkopf
- 8: Trägerprofil
- 9: Leitschiene
- 10: Zahnrad
- 11: Bobbin-Tool
- 12: Stringer
- 13: Trenneinheit
- 14: Sensoreinheit

## Patentansprüche

1. Bewegbare Fügeeinrichtung zum Verbinden von Strukturbauteilen (2a, 2b) eines Luftfahrzeuges, mit Fügemitteln, welche auf einer an der Außenseite der Strukturbauteile (2a, 2b) angeordneten Führungsvorrichtung (1) verfahrbar angeordnet ist, um benachbart zueinander positionierte Fügekanten (3a, 3b) der Strukturbauteile (2a, 2b) fest miteinander zu verbinden,
**dadurch gekennzeichnet, dass** die Fügemittel eine auf der schienenartigen Führungsvorrichtung (1) verfahrbare Schweißeinheit (4) umfassen, die mit einem Bobbin-Tool (11) als Werkzeug zum Reibrührschweißen ausgestattet ist.

2. Bewegbare Fügeeinrichtung nach Anspruch 1,
**dadurch gekennzeichnet, dass** die verfahrbare Schweißeinheit (4) einen Trägerwagen (5) umfasst, der entlang der schienenartigen Führungsvorrichtung (1) über einen Antriebsmotor (6) bewegbar ist und einen Schweißkopf (7) zur Aufnahme des Bobbin-Tools (11) zum Reibrührschweißen trägt.

3. Bewegbare Fügeeinrichtung nach Anspruch 2,
**dadurch gekennzeichnet, dass** der Schweißkopf (7) in Vertikalrichtung und/oder Horizontalrichtung bewegbar am Trägerwagen (5) angebracht ist, um das Bobbin-Tool (11) an den Verlauf der Fügekanten (3a, 3b) anzupassen.

4. Bewegbare Fügeeinrichtung nach Anspruch 1,
**dadurch gekennzeichnet, dass** der Trägerwagen (5) zwischen den Achsen horizontal gelenkig ausgebildet ist, um eine gleichmäßige Auflage auf die dreidimensional verlaufende Führungsvorrichtung (1) zu schaffen.

5. Bewegbare Fügeeinrichtung nach Anspruch 1,
**dadurch gekennzeichnet, dass** eine auf der schienenartigen Führungsvorrichtung (1) verfahrbare Trenneinheit (13) vorgesehen ist, um die Strukturbauteile (2a, 2b) vor dem Verschweißen auf Fertigmaß zu schneiden oder zu säubern.

6. Bewegbare Fügeeinrichtung nach Anspruch 1,
**dadurch gekennzeichnet, dass** die schienenartige Führungsvorrichtung (1) im Bereich der Fügekanten (3a, 3b) außen an den Strukturbauteilen (2a, 2b) lösbar befestigt ist.

7. Bewegbare Fügeeinrichtung nach Anspruch 1,
**dadurch gekennzeichnet, dass** die schienenartige Führungsvorrichtung (1) aus längs der beiden Fügekanten (3a, 3b) angeordneten und diesen je zugeordneten Trägerprofile (8a, 8b) ausgebildet ist.

8. Bewegbare Fügeeinrichtung nach Anspruch 1,
**dadurch gekennzeichnete, dass** die Trägerprofile (8a, 8b) einen flachen oder L-förmigen Querschnitt aufweisen.

9. Bewegbare Fügeeinrichtung nach Anspruch 7,
**dadurch gekennzeichnet, dass** an jedem Trägerprofil (8a, 8b) eine Leitschiene (9a; 9b) ausgebildet ist, die formschlüssig am Trägerwagen (5) zur Führung und zur Aufnahme von zumindest prozessbedingten Querkräften zum Eingriff kommt.

10. Bewegbare Fügeeinrichtung nach Anspruch 7,
**dadurch gekennzeichnet, dass** der Trägerwagen (5) über Zahnräder (10) entlang der schienenartigen Führungsvorrichtung (1) bewegbar ist, deren Trägerprofile (9a, 9b) als Zahnstangen ausgebildet sind.

11. Bewegbare Fügeeinrichtung nach Anspruch 1,
**dadurch gekennzeichnet, dass** der Trägerwagen (5) mit einer Sensoreinheit (14) zur Qualitätskontrolle des Trenn-oder Schweißvorgangs ausgestattet ist.

12. Bewegbare Fügeeinrichtung nach Anspruch 1,
**dadurch gekennzeichnet, dass** die Strukturbauteile (2a, 2b) als schalenförmige Rumpfsegmente oder tonnenförmige Rumpfsektionen ausgebildet sind.
